# EUROPÄISCHE PATENTSCHRIFT

(11) **EP 3 278 650 B1**
(45) Veröffentlichungstag und Bekanntmachung des Hinweises auf die Patenterteilung: **28.08.2019**
(21) Anmeldenummer: 17184216.4
(22) Anmeldetag: 01.08.2017
(51) Int. Cl.: A01C 21/00, A01C 15/00, A01C 7/10

(54) **ANORDNUNG ZUR ERFASSUNG DER MENGE AN MATERIAL IN EINEM VORRATSBEHÄLTER EINER MASCHINE ZUM AUSBRINGEN VON MATERIAL AUF EIN FELD**
ARRANGEMENT FOR DETECTING THE AMOUNT OF MATERIAL IN A STORAGE TANK OF A MACHINE FOR APPLYING MATERIAL TO A FIELD
DISPOSITIF DE DÉTECTION DE LA QUANTITÉ DE MATÉRIAU DANS UN RÉCIPIENT DE STOCKAGE D'UNE MACHINE PERMETTANT LA DISTRIBUTION DE MATÉRIAU SUR UN CHAMP

(30) Priorität: 05.08.2016 DE 102016214553
(43) Veröffentlichungstag der Anmeldung: 07.02.2018
(73) Patentinhaber: Deere & Company, Moline, IL 61265 (US)
(72) Erfinder: Gresch, Valentin, 68163 Mannheim (DE); Kremmer, Martin, 68163 Mannheim (DE)
(74) Vertreter: Holst, Sönke

(56) Entgegenhaltungen:
- US-A- 6 070 539
- US-A- 6 079 340
- US-A1- 2011 098 851

## Beschreibung

Die Erfindung betrifft eine Anordnung zur Erfassung der Menge an Material in einem Vorratsbehälter einer Maschine zum Ausbringen von Material auf ein Feld, umfassend eine Berechnungseinrichtung, die mit Mitteln zur Erfassung von Daten hinsichtlich einer zu einem bestimmten Zeitpunkt vorhandenen Menge an Material im Vorratsbehälter und einen Sensor zur Erfassung der Menge aus dem Vorratsbehälter abfließenden Materials verbunden und programmiert ist, die aktuelle Menge an Material im Vorratsbehälter anhand der erhaltenen Daten und der nach dem bestimmten Zeitpunkt erhaltenen Signale des Sensors zu berechnen.

### Stand der Technik

Sämaschinen werden in der Landwirtschaft verwendet, um Saatgut in die Erde einzubringen. Das Saatgut wird bei Einzelkornsämaschinen durch eine Zumesseinrichtung körnerweise aus einem Vorratsbehälter entnommen und in den Boden eingebracht. Üblicherweise sind mehrere Säeinheiten seitlich nebeneinander angeordnet, um mehrere Reihen gleichzeitig säen zu können. Üblicherweise ist jeder Säeinheit ein eigener, kleinerer Vorratsbehälter zugeordnet, oder alle Säeinheiten sind mit einem größeren gemeinsam genutzten Vorratsbehälter verbunden, der das Saatgut nach und nach in einen kleineren, der einzelnen Säeinheit zugeordneten Vorratsbehälter zuführt.

Insbesondere dann, wenn jeder Säeinheit ein eigener, kleinerer Vorratsbehälter zugeordnet ist, ist es relativ wichtig, darauf zu achten, dass sich noch Saatgut darin befindet, denn anderenfalls entstehen ungewünschte Lücken im gesäten Pflanzenbestand. Der Bediener der Sämaschine muss demnach darauf achten, dass er genug Saatgut eingefüllt hat und den Füllstand von Zeit zu Zeit kontrollieren. Dazu muss er seinen Arbeitsplatz am Zugfahrzeug verlassen und alle Vorratsbehälter der Sämaschine inspizieren, was relativ zeitaufwändig ist.

Es wurde in der US 6 070 539 A vorgeschlagen, die einzelnen Vorratsbehälter einer Sämaschine mit nicht näher beschriebenen Füllstandsensoren auszustatten, die eine Warnung an eine Berechnungseinrichtung abgeben, wenn das im Vorratsbehälter enthaltene Saatgut unter ein vorbestimmtes Niveau fällt. In diesem Fall kann der Bediener auf einen Hinweis der Berechnungseinrichtung hin den Vorratsbehälter auffüllen oder es wird automatisch oder nach Bedienerbestätigung auf einen anderes Saatgut enthaltenden Vorratsbehälter umgeschaltet. Zudem ist ein Sensor zur Erfassung einer Saatgutrate vorgesehen, der die abgegebenen Saatgutkörner zählt und im Fall, dass der Vorratsbehälter leer ist, eine Warnung an die Berechnungseinrichtung und schließlich an den Bediener abgibt.

Als Füllstandsensoren für Sämaschinen wurden im Stand der Technik Gewichtssensoren (DE 88 05 329 U1, DE 28 19 365 A1, EP 1 155 606 A2) oder andere, mit dem Saatgut mechanisch, elektrisch oder akustisch zusammenwirkende Sensoren (DE 88 05 329 U1) vorgeschlagen. Die als gattungsbildend angesehene US 9 198 343 B2 beschreibt eine Sämaschine, die sich aus mehreren Sektionen zusammensetzt, nämlich einem mittleren Abschnitt mit einem größeren Saatguttank, dessen Inhalt nach und nach den einzelnen Säeinheiten zugeführt wird, und seitlichen Flügelabschnitten. Durch hydraulische Zylinder bereitgestellte, die Flügelabschnitte nach unten drückende Abstützkräfte werden selbsttätig verstellt, basierend auf dem Gewicht des Saatguttanks, dessen Inhalt anhand einer einmaligen Erfassung seines Füllstands und der ausgebrachten Saatgutmengen ermittelt wird, die durch Sensoren der Säeinheiten gezählt werden. Die Erfassung des Füllstands erfolgt durch einen Bediener mittels einer Eingabe in eine Steuerung.

### Aufgabe

Bei dem die Saatgutrate erfassenden Sensor der US 6 070 539 A ist als nachteilig anzusehen, dass er erst dann ein Signal abgibt, wenn bereits eine Lücke im gesäten Pflanzenbestand entstanden ist. Die anderen, erwähnten Sensoren zur Erfassung des Füllstands sind relativ aufwändig. Bei der US 9 198 343 B2 dient der gemessene Inhalt des Saatguttanks nur zur Steuerung der Abstützkräfte.

### Lösung

Dieses Problem wird erfindungsgemäß durch die Lehre des Patentanspruchs 1 gelöst, wobei in den weiteren, abhängigen Patentansprüchen 2 - 10 Merkmale aufgeführt sind, die die Lösung in vorteilhafter Weise weiterentwickeln.

Eine Anordnung zur Erfassung der Menge an Material in einem Vorratsbehälter einer Maschine zum Ausbringen von Material auf ein Feld umfasst eine Berechnungseinrichtung, die mit Mitteln zur Erfassung von Daten hinsichtlich einer zu einem bestimmten Zeitpunkt vorhandenen Menge an Material im Vorratsbehälter und mit einem Sensor zur Erfassung der Menge aus dem Vorratsbehälter abfließenden Materials verbunden ist. Die Berechnungseinrichtung ist programmiert, die aktuelle Menge an Material im Vorratsbehälter anhand der erhaltenen Daten und der nach dem bestimmten Zeitpunkt erhaltenen Signale des Sensors zu berechnen. Die Berechnungseinrichtung ist programmiert, bei Unterschreiten einer vorbestimmten Menge an Material im Vorratsbehälter ein Warnsignal abzugeben, um den Bediener darauf hinzuweisen, den Vorratsbehälter wieder aufzufüllen.

Mit anderen Worten wird die Menge des Materials im Vorratsbehälter nicht direkt gemessen, sondern es wird zu einem bestimmten Zeitpunkt erfasst oder zumindest abgeschätzt, welche Menge an Material im Vorratsbehälter vorhanden ist. Zudem wird nach dem erwähnten, bestimmten Zeitpunkt mittels eines Sensors erfasst, wie welche Menge an Material aus dem Vorratsbehälter entnommen - und auf das Feld ausgebracht - wurde. Derartige Sensoren sind bei den heutigen Maschinen zum Ausbringen von Material standardmäßig vorhanden, um deren Funktion überwachen und/oder regeln zu können. Die Menge des entnommenen Materials wird hochintegriert und von der am bestimmten Zeitpunkt bestimmten Menge abgezogen, um die aktuellen Menge des Materials im Vorratsbehälter zu errechnen. Auf diese Weise erspart man sich einen separaten Sensor zur Erfassung des Füllstandes im Vorratsbehälter und kann den Bediener rechtzeitig warnen, den Vorratsbehälter wieder aufzufüllen.

Als "Menge" kann hier beispielsweise das Volumen des Materials im Vorratsbehälter, die Masse des Materials im Vorratsbehälter, die Anzahl der Körner des Materials im Vorratsbehälter oder der Füllstand des Materials im Vorratsbehälter verstanden werden. Als "Warnung" kann ein beliebiges Signal an den Bediener angesehen werden, wie eine akustische Information (Glockenton o.ä.), ein optisches Signal (Hinweis auf einer Anzeigeeinrichtung oder eine Anzeige der Menge des Materials).

Die Mittel zur Erfassung von Daten können eine Eingabeeinrichtung zur manuellen Eingabe einer Information hinsichtlich einer zum bestimmten Zeitpunkt vorhandenen Menge an Material im Vorratsbehälter umfassen. Der Bediener kann demnach anhand einer Skala des Vorratsbehälters abschätzen, wie hoch der Füllstand ist und diesen in die Eingabeeinrichtung eingeben. Wenn er einen leeren oder fast leeren Vorratsbehälter auffüllt, kann er in die Eingabeeinrichtung eingeben, welches Volumen oder welche Masse das eingefüllte Material hat. In diesem Fall kann er alternativ Daten hinsichtlich des Gebindes, in dem das gesamte in den Vorratsbehälter eingefüllte Material enthalten war, eingeben oder einlesen (z.B. mittels einer Kamera einen Barcode oder eine andere Identifikation des Gebindes erfassen) und die Berechnungseinrichtung ermittelt anhand dieser Daten die Menge an Material im Vorratsbehälter. Bei einer anderen Ausführungsform kann die besagte Information hinsichtlich einer zum bestimmten Zeitpunkt vorhandenen Menge an Material im Vorratsbehälter anhand eines separaten Füllstandsensors erfolgen, der erfasst, wenn ein vorbestimmter Füllstand im Vorratsbehälter unterschritten wird, der beispielsweise einem nur noch zu 10 % gefüllten Vorratsbehälter entspricht. Dieser Füllstandsensor kann relativ einfach und preiswert aufgebaut sein, beispielsweise als Lichtschranke, da er nur das Unterschreiten eines Füllstands erfassen muss.

Insbesondere kann das Material aus Körnern bestehen und der Sensor zur Zählung der aus dem Vorratsbehälter entnommenen Körner eingerichtet sein. Derartiges Material wird üblicherweise durch eine Einzelkornsämaschine mit einer Vereinzelungsvorrichtung für das Material ausgebracht. Sollte die Maschine hingegen das Material nicht körnerweise ausbringen, wie bei einer Drillmaschine, wäre es auch denkbar, mit dem Sensor andere Daten hinsichtlich des ausgebrachten Materials zu erfassen, wie deren Volumen oder Masse.

Bei einer Zählung des körnerweise ausgebrachten Materials ist es sinnvoll, der Berechnungseinrichtung Daten hinsichtlich eines Verhältnisses zwischen der Anzahl der Körner des Materials und dessen Volumen oder Masse zuzuführen und dieses Verhältnis beim Berechnen der Menge an Material im Vorratsbehälter zu berücksichtigen. Wenn der Füllstand im Vorratsbehälter bekannt ist, beispielsweise anhand einer Eingabe des Bedieners, kann anhand dessen Form das Volumen des vorhandenen Materials und bei bekannter Massendichte ggf. die Masse des vorhandenen Materials berechnet werden. Das abfließende Volumen oder die abfließende Masse können anhand der erwähnten Daten berechnet werden und somit schließlich auch das im Vorratsbehälter verbleibende Volumen des Materials oder dessen Masse berechnet werden.

Die besagten Daten hinsichtlich des Verhältnisses zwischen der Anzahl der Körner des Materials und dessen Volumen oder Masse können in die Berechnungseinrichtung mittels einer Eingabeeinrichtung durch einen Bediener eingegeben werden oder sie werden anhand einer das Material identifizierenden Information aus einem lokalen oder beabstandeten Speicher ausgelesen, wobei die das Material identifizierende Information durch den Bediener eingebbar oder anhand eines Identifikationsmerkmals eines Gebindes des Materials ableitbar ist.

Die Berechnungseinrichtung kann programmiert sein, anhand der berechneten Menge an Material im Vorratsbehälter die mit dem Material noch beaufschlagbare Wegstrecke oder Fläche zu berechnen und zur Anzeige zu bringen. Die Berechnungseinrichtung kann programmiert sein, anhand eines Ausbringplans, in dem eine Karte des Feldes mit dem vorgesehenen Weg der Maschine und den vorgesehenen Ablagepositionen oder Ablageabständen des Materials eingetragen ist, die mit dem im Vorratsbehälter vorhandenen Material noch beaufschlagbare Wegstrecke oder Fläche zu berechnen und zur Anzeige zu bringen. Hierbei kann die Wegstrecke berechnet und zur Anzeige gebracht werden, welche von mehreren mit jeweils einem eigenen Vorratsbehälter ausgestatteten Einheiten der Maschine den kürzesten Restlaufweg hat.

Die Berechnungseinrichtung kann als Bordcomputer eines die Maschine ziehenden oder anderweitig über ein Feld bewegenden Ackerschleppers oder selbstfahrenden Maschine oder als separates Gerät ausgeführt sein, beispielsweise als Mobiltelefon oder Tablet- oder Laptop-Computer.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer Maschine zum Ausbringen von Material auf ein Feld mit einer Anordnung zur Erfassung der Menge an Material in ihrem Vorratsbehälters, und
- Fig. 2: ein Flussdiagramm, nach dem die Berechnungseinrichtung der Anordnung arbeitet.

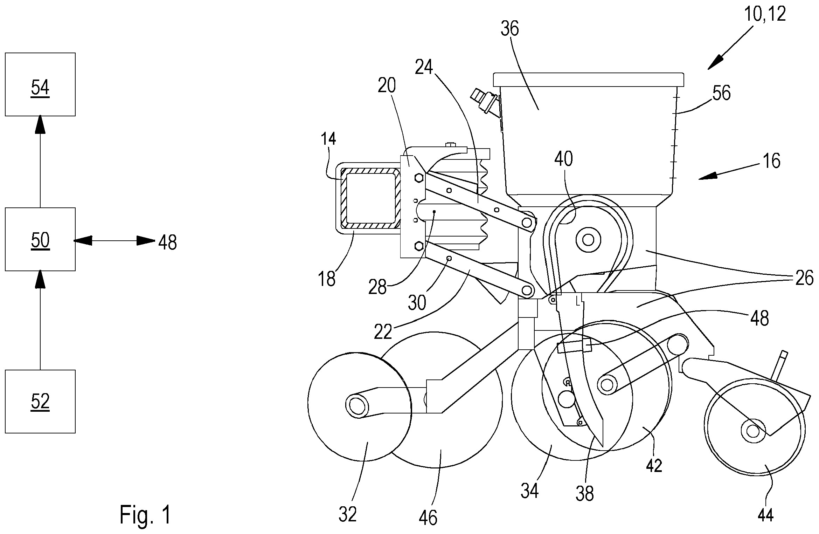

Die Figur 1 zeigt als Beispiel für eine Maschine 10 zum Ausbringen von Material auf ein Feld eine Einzelkorn-Sämaschine 12. Die Sämaschine 12 umfasst einen Querträger 14, der auf beliebige Weise mit einem die Sämaschine 12 über ein Feld ziehenden und sie tragenden, nicht gezeigten Ackerschlepper oder einem separaten, vom Ackerschlepper gezogenen Fahrgestellt befestigt ist. Der Querträger 14 erstreckt sich über die ganze Breite der Sämaschine 12 und an ihm sind seitlich nebeneinander eine Anzahl von Säeinheiten 16 befestigt. Die Befestigung der Säeinheiten 16 am Querträger 14 erfolgt über U-förmige Halterungen 18, die mit einer Konsole 20 verbunden sind, die sich vertikal an der Rückseite des Querträgers 14 erstreckt und an der übereinander zwei Lenker 22, 24 angelenkt sind, die außerdem jeweils an einem Gestell 26 der Säeinheit 16 angelenkt sind. Die Lenker 22, 24 bilden mit der Konsole 20 und dem Gestell 26 ein verstellbares Parallelogramm, das die Höhe des Gestells 26 über dem Boden definiert. Ein als Vorspannmittel dienender pneumatischer Aktor 28 greift einerseits oben an der Konsole 20 und andererseits unten am unteren Lenker 22 (am Punkt 30) an und definiert die Position des Gestells 26 und die Andruckkraft, mit der am Gestell 26 abgestützte Furchenöffner 34, 46 mit dem Erdboden zusammenwirken.

Das Gestell 26 trägt in an sich bekannter Weise einen Vorratsbehälter 36, ein Särohr 38 sowie eine (insbesondere pneumatische, mit von einem nicht gezeigten Gebläse bereitgestellten Unterdruck arbeitende) Zumesseinrichtung 40, die nach und nach einzelne Körner des Saatguts aus dem Vorratsbehälter 36 in das Särohr 40 abgibt, welches es in eine Furche ablegt, die durch den Furchenöffner 34 erzeugt wird, dessen Arbeitstiefe durch ein Tiefeneinstellrad 42 vorgegeben wird. Die Furche wird durch ein Schließrad 44 geschlossen. Eine weitere Furche kann durch den Furchenöffner 46 erzeugt werden, dessen Arbeitstiefe durch ein Tiefeneinstellrad 32 vorgegeben wird. Diese weitere Furche kann zur Aufnahme von Düngemitteln durch ein weiteres, nicht gezeigtes Schar dienen und ebenfalls durch das Schließrad 44 geschlossen werden. Hinsichtlich weiterer Einzelheiten der Säeinheiten 16 wird auf die Offenbarung der EP 2 517 545 A1 verwiesen.

Zur Bestimmung der Menge an im Vorratsbehälter 36 enthaltenen Materials, bei dem es sich hier um körniges Saatgut handelt, ist eine Berechnungseinrichtung 50 vorgesehen, die mit einer Bedienereingabeeinrichtung 52, einer Anzeigeeinrichtung 54 und einem Sensor 48 zur Erfassung der Menge von Saatgutkörnern verbunden, welcher die Anzahl der durch die Zumesseinrichtung 40 aus dem Vorratsbehälter 36 in das Saatrohr 38 und somit in den Boden abgegebenen Saatgutkörner erfasst, beispielsweise optisch. Derartige Sensoren sind im Stand der Technik hinlänglich bekannt und dienen zur Regelung des Antriebs der Zumesseinrichtung 40. Der Sensor 48 kann drahtlos mit der Berechnungseinrichtung 50, z.B. durch elektromagnetische Wellen, oder über ein Kabel mit ihr verbunden sein, z.B. über einen Bus. Die Bedienereingabeeinrichtung 52 kann als Tastatur oder berührungsempfindliche Anzeigeeinrichtung 54 ausgeführt sein. Die Bedienereingabeeinrichtung 52, die Berechnungseinrichtung 50 und die Anzeigeeinrichtung 54 können als Bordcomputer eines Ackerschleppers ausgeführt sein, der die Sämaschine 12 zieht oder trägt, oder als separates, insbesondere tragbares Gerät in Form eines Smartphones oder Tablet- oder Laptopcomputers.

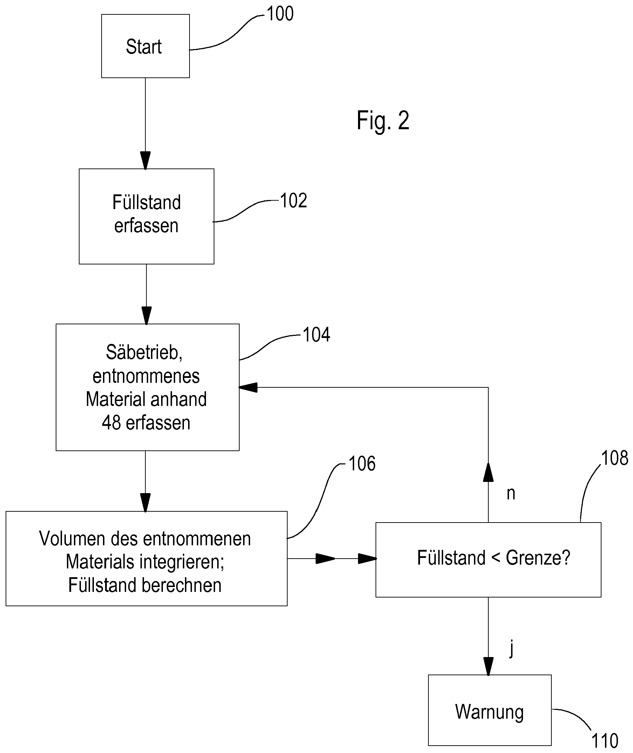

Die Vorgehensweise der Berechnungseinrichtung 50 ist in der Figur 2 gezeigt. Nach dem Start im Schritt 100 wird im Schritt 102 der Füllstand des Vorratsbehälters 36 erfasst. Der Bediener begibt sich dazu zum Vorratsbehälter 36 und liest, vorzugsweise nachdem er den Vorratsbehälter 36 für einen Sävorgang mit Material in Form von Saatgut befüllt hat, dessen Füllstand an einer Skala 56 ab und gibt diesen Füllstand in die Bedienereingabeeinrichtung 52 ein.

Im folgenden Schritt 104 wird nun der Säbetrieb aufgenommen, d.h. die Maschine 10 wird über ein Feld bewegt und mittels der Zumesseinrichtung 40 nach und nach Material aus dem Vorratsbehälter 36 entnommen. Durch den Sensor 48 wird erfasst, wie viele Körner nach und nach in den Erdboden abgegeben werden.

Im Schritt 106 wird das Volumen des entnommen Materials hochintegriert. Dazu liegen der Berechnungseinrichtung 50 Daten hinsichtlich des Verhältnisses zwischen der Anzahl der Körner des Materials und dessen Volumen (d.h. der Volumendichte) vor. Diese Daten können beispielsweise besagen, wie viele Körner einen Liter an Volumen ausmachen. Diese Daten können durch den Bediener im Schritt 100 eingegeben worden sein oder anhand von einer das Material identifizierenden Information aus einem lokalen Speicher der Berechnungseinrichtung 50 oder über eine Datenübertragungseinrichtung (z.B. Mobilfunkverbindung über ein Internetprotokoll) aus einem beabstandeten Speicher (externer Server o.ä.) ausgelesen worden sein, wofür die das Material identifizierende Information durch den Bediener eingebbar (z.B. in Form einer Bezeichnung für das Material, wie Saatgut XYZ mit Chargennummer n der Firma QRST) oder anhand eines Identifikationsmerkmals (z.B. Barcode oder QR-Code) eines Gebindes (Sackes o.ä.) des Materials abgeleitet werden. Die Berechnungseinrichtung 50 integriert oder summiert die Anzahl der entnommenen Körner und teilt sie durch die (in Anzahl pro Volumen) gemessene Dichte des Materials und bestimmt das entnommene Volumen. Anhand des ursprünglichen Füllstands (Schritt 102) und des entnommenen Volumens wird im Schritt 106 der nun vorliegende, aktuelle Füllstand berechnet.

Im Schritt 108 wird abgefragt, ob der aktuelle Füllstand kleiner als ein vorgegebener Grenzwert ist, der fest definiert oder durch den Bediener eingebbar sein kann. Ist das nicht der Fall, folgt wieder der Schritt 104 und anderenfalls der Schritt 110, in dem über die Anzeigeeinrichtung 54 eine Warnung an den Bediener gegeben wird. Nach dem Auffüllen des Vorratsbehälters 36 kann das Verfahren der Figur 2 dann wieder mit dem Schritt 100 fortgeführt werden.

Die Berechnungseinrichtung 50 kann programmiert sein, während der Schritte 104 bis 108 den aktuellen Füllstand auf der Anzeigeeinrichtung 54 anzuzeigen. Auch kann angezeigt werden, welche Wegstrecke bzw. Fläche mit dem vorhandenen Material im Vorratsbehälter 36 noch zurückgelegt werden kann. Hierzu können der Berechnungseinrichtung 50 Daten hinsichtlich des Abstands aufeinander folgender Ablagepositionen des Materials zugeführt werden, was insbesondere durch eine Steuerung der Zumesseinrichtung 40 oder anhand eines der Berechnungseinrichtung 50 vorliegenden Ausbringplans, in dem eine Karte des Feldes mit dem gewünschten Weg der Sämaschine 12 und den vorgesehenen Ablagepositionen oder Ablageabständen des Saatguts eingetragen ist, erfolgen kann. Es wird somit berücksichtigt, welchen genauen Weg eine Säeinheit 16 zurücklegen soll und wie die Abstände der Ablagepositionen sind. Eine kurvenäußere Säeinheit 16 wird somit bei gleichen Abständen der Materialabgabepositionen mehr Material (Saatgut) abgeben als eine kurveninnere Säeinheit 16. Falls die Sämaschine 12 mehrere Säeinheiten 16 umfasst, denen jeweils ein Vorratsbehälter 36 zugeordnet ist, werden die Schritte 100 bis 110 und die Berechnung des Restlaufwegs für alle Säeinheiten 16 getrennt durchgeführt. Hierbei wird berücksichtigt, welche der mehreren Säeinheiten 16 der Sämaschine 12 den kürzesten Restlaufweg hat und genau dieser zur Anzeige gebracht.

Sollte die Sämaschine 12 mehrere Vorratsbehälter 36 umfassen, die einer Zumesseinrichtung 40 zugeordnet sind und zwischen denen selbsttätig oder von Hand umgeschaltet werden kann (s. US 5915 313 A1), um beispielsweise an Stellen unterschiedlicher Bodenarten oder Topologie unterschiedliches Saatgut ausbringen zu können, kann anhand des Ausbringplanes ermittelt werden, welche Menge welchen Saatguts für den geplanten Weg benötigt wird, d.h. die Reichweite wird anhand der Zielpopulationen im Ausbringplan bestimmt. Ist die Aussaatreihenfolge nicht bekannt, wird die aktuelle Zielpopulation als Grundlage für die erzielbare Reichweite verwendet.

Der Bediener weiß somit, wie weit er noch ohne Auffüllen des Vorratsbehälters 36 arbeiten kann und kann eventuelle Arbeitsunterbrechungen ggf. gleich mit zum Auffüllen des Vorratsbehälters 36 nutzen, wenn es sinnvoll erscheint.

Falls die Maschine 10 einen weiteren Vorratsbehälter für Düngemittel umfassen sollte, kann auch dessen Füllstand mit der beschriebenen Vorgehensweise ermittelt werden.

Schließlich sei noch angemerkt, dass man zusätzlich (als Redundanz) noch einen Füllstandsensor in den Vorratsbehälter 36 einbauen und mit der Berechnungseinrichtung 50 verbinden könnte. Ein derartiger Füllstandsensor könnte zwischen einem größeren Saatgutbehälter und einem kleineren, darunter angeordneten Behälter angeordnet werden, wie sie in der DE 10 2014 019 755 A1 beschrieben werden. Mit diesem z.B. als Lichtschranke ausgeführten Sensor lässt sich erkennen, wenn der größere Saatgutbehälter leer ist und nur noch eine kleine Menge Saatgut verfügbar ist. Darüber lässt sich eine Füllstandwarnung ähnlich der Figur 2 realisieren, analog einer Kraftstoff-Füllstandwarnung in einem Pkw. Weiterhin kann der erwähnte Füllstandsensor (oder ein beliebiger, anderer Füllstandsensor im Vorratsbehälter 36) dazu dienen, das Unterschreiten eines bestimmten Füllstands im Vorratsbehälter 36 zu erfassen und sein Signal kann anstelle der Bedienereingabe des Schritts 102 treten.

## Patentansprüche

1. Anordnung zur Erfassung der Menge an Material in einem Vorratsbehälter (36) einer Maschine (10) zum Ausbringen von Material auf ein Feld, umfassend eine Berechnungseinrichtung (50), die mit Mitteln zur Erfassung von Daten hinsichtlich einer zu einem bestimmten Zeitpunkt vorhandenen Menge an Material im Vorratsbehälter (36) und einen Sensor (48) zur Erfassung der Menge aus dem Vorratsbehälter (36) abfließenden Materials verbunden und programmiert ist, die aktuelle Menge an Material im Vorratsbehälter (36) anhand der erhaltenen Daten und der nach dem bestimmten Zeitpunkt erhaltenen Signale des Sensors (48) zu berechnen, indem sie die Menge des abfließenden Materials hochintegriert und von der am bestimmten Zeitpunkt bestimmten Menge abzieht, und die Berechnungseinrichtung (50) programmiert ist, ein Warnsignal abzugeben, falls die berechnete, aktuelle Menge an Material im Vorratsbehälter (36) eine vorbestimmte Menge unterschreitet.

2. Anordnung nach Anspruch 1, wobei die Mittel zur Erfassung von Daten eine Eingabeeinrichtung (52) zur manuellen Eingabe einer Information hinsichtlich einer zum bestimmten Zeitpunkt vorhandenen Menge an Material im Vorratsbehälter (36) und/oder einen Füllstandsensor umfassen.

3. Anordnung nach Anspruch 1 oder 2, wobei das Material aus Körnern besteht und der Sensor (48) zur Zählung der aus dem Vorratsbehälter (36) entnommenen Körner eingerichtet ist.

4. Anordnung nach Anspruch 3, wobei die Berechnungseinrichtung (50) programmiert ist, Daten hinsichtlich eines Verhältnisses zwischen der Anzahl der Körner des Materials und dessen Volumen oder Masse zu erhalten und dieses Verhältnis beim Berechnen der Menge an Material im Vorratsbehälter (36) zu berücksichtigen.

5. Anordnung nach Anspruch 4, wobei die Berechnungseinrichtung (50) programmiert ist, die Daten hinsichtlich des Verhältnisses mittels einer Eingabeeinrichtung (52) durch einen Bediener eingebbar oder sie anhand einer das Material identifizierenden Information aus einem lokalen oder beabstandeten Speicher auszulesen, wobei die das Material identifizierende Information durch den Bediener eingebbar oder anhand eines Identifikationsmerkmals eines Gebindes des Materials ableitbar ist.

6. Anordnung nach einem der vorhergehenden Ansprüche, wobei die Berechnungseinrichtung (50) programmiert ist, anhand der berechneten Menge an Material im Vorratsbehälter (36) die mit dem Material noch beaufschlagbare Wegstrecke oder Fläche zu berechnen und zur Anzeige zu bringen.

7. Anordnung nach Anspruch 6, wobei die Berechnungseinrichtung (50) programmiert ist, anhand eines Ausbringplans, in dem eine Karte des Feldes mit dem vorgesehenen Weg der Maschine (10) und den vorgesehenen Ablagepositionen oder Ablageabständen des Materials eingetragen ist, die mit dem im Vorratsbehälter (36) vorhandenen Material noch beaufschlagbare Wegstrecke oder Fläche zu berechnen und zur Anzeige zu bringen.

8. Anordnung nach Anspruch 6 oder 7, wobei die Berechnungseinrichtung (50) programmiert ist, die Wegstrecke zu berechnen und zur Anzeige zu bringen, welche von mehreren mit jeweils einem eigenen Vorratsbehälter (36) ausgestatteten Einheiten (16) der Maschine (12) den kürzesten Restlaufweg hat.

9. Anordnung nach einem der vorhergehenden Ansprüche, wobei die Berechnungseinrichtung (50) einem Bordcomputer der Maschine (10) oder eines sie bewegenden Fahrzeugs zugeordnet oder als davon getrenntes, tragbares Gerät realisiert ist.

10. Maschine (10) zum Ausbringen von Material auf ein Feld mit einer Anordnung nach einem der vorhergehenden Ansprüche, in Form einer Maschine (10) zum Ausbringen von Saatgut und/oder Dünger und/oder Chemikalien.

## Claims

1. Arrangement for detecting the amount of material in a storage container (36) of a machine (10) for applying material to a field, comprising a calculation device (50) which is connected to means for acquiring data relating to an amount of material which is present in the storage container (36) at a specific point in time, and a sensor (48) for detecting the amount of material flowing out of the storage container (36), and is programmed to calculate the current amount of material in the storage container (36) on the basis of the data obtained and the signals, obtained after the specific point in time, of the sensor (48) in that said calculation device highly integrates the quantity of material flowing out and subtracts it from the amount determined at the specific point in time and the calculation device (50) is programmed to output a warning signal if the calculated current amount of material in the storage container (36) undershoots a predetermined amount.

2. Arrangement according to Claim 1, wherein the means for acquiring data comprise an input device (52) for manually inputting information relating to an amount of material which is present in the storage container (36) at a specific point in time and/or a filling level sensor.

3. Arrangement according to Claim 1 or 2, wherein the material is composed of grains, and the sensor (48) is configured to count the grains extracted from the storage container (36).

4. Arrangement according to Claim 3, wherein the calculation device (50) is programmed to obtain data relating to a ratio between the number of the grains of the material and the volume or mass thereof and to take into account this ratio when calculating the amount of material in the storage container (36) .

5. Arrangement according to Claim 4, wherein the calculation device (50) is programmed inputtable the data relating to the ratio by means of an input device (52) by an operator or to read said data out from a local or remote memory on the basis of information identifying the material, wherein the information which identifies the material can be input by the operator or derived on the basis of an identification feature of a container of the material.

6. Arrangement according to one of the preceding claims, wherein the calculation device (50) is programmed to calculate, on the basis of the calculated amount of material in the storage container (36), the distance or area over which the material can still be applied and to display said distance or area.

7. Arrangement according to Claim 6, wherein the calculation device (50) is programmed to calculate, on the basis of an application diagram in which a map of the field with the envisaged path of the machine (10) and the envisaged discharging positions or discharging intervals of the material are entered, the distance or area over which the material which is present in the storage container (36) can still be applied and to display said distance or area.

8. Arrangement according to Claim 6 or 7, wherein the calculation device (50) is programmed to calculate the distance and to display which of a plurality of units (16) of a machine (12) which are each equipped with a separate storage container (36) has the shortest residual itinerary.

9. Arrangement according to one of the preceding claims, wherein the calculation device (50) is assigned to an on-board computer of the machine (10) or of a vehicle moving said machine (10), or is implemented as a portable device which is separate from said on-board computer.

10. Machine (10) for applying material to a field having an arrangement according to one of the preceding claims, in the form of a machine (10) for applying seed and/or fertilizer and/or chemicals.

## Revendications

1. Dispositif, destiné à détecter la quantité de matière dans une citerne de réserve (36) d'une machine (10), pour l'application de la matière sur un champ, comprenant un système de calcul (50) qui est connecté avec des moyens de détection de données concernant une quantité de matière présente dans la citerne de réserve (36) à un moment donné et avec un capteur (48) pour la détection de la quantité de matière s'écoulant de la citerne de réserve (36) et qui est programmé pour calculer la quantité actuelle de matière dans la citerne de réserve (36) à l'aide des données obtenues et des signaux du capteur (48) obtenus après le moment donné, en ce qu'il intègre à grande échelle la quantité de la matière qui s'écoule et la soustrait de celle qui a été déterminée au moment donné et le système de calcul (50) est programmé pour délivrer un signal d'alerte si la quantité actuelle calculée de matière dans la citerne de réserve (36) n'atteint pas une quantité prédéfinie.

2. Dispositif selon la revendication 1, les moyens de détection de données comprenant un système de saisie (52), destiné à la saisie manuelle d'une information concernant une quantité de matière présente dans la citerne de réserve (36) à un moment donné et/ou un capteur de niveau.

3. Dispositif selon la revendication 1 ou 2, la matière étant constituée de graines et le capteur (48) étant aménagé pour compter les graines prélevées dans la citerne de réserve (36).

4. Dispositif selon la revendication 3, le système de calcul (50) étant programmé pour obtenir des données concernant un rapport entre le nombre de graines de la matière et son volume ou sa masse et pour prendre en considération ledit rapport lors du calcul de la quantité de matière dans la citerne de réserve (36).

5. Dispositif selon la revendication 4, le système de calcul (50) étant programmé pouvant être saisies les données concernant le rapport à l'aide d'un système de saisie (52) par un opérateur ou pour lire ces données à l'aide d'une information identifiant la matière et figurant dans une mémoire locale ou distante, l'information identifiant la matière étant susceptible d'être saisie par l'opérateur ou d'être dérivée d'une caractéristique d'identification d'un contenant de la matière.

6. Dispositif selon l'une quelconque des revendications précédentes, le système de calcul (50) étant programmé pour calculer, à l'aide de la quantité de matière calculée dans la citerne de réserve (36) le trajet ou la surface encore susceptible d'être couvert(e) par la matière et pour l'afficher.

7. Dispositif selon la revendication 6, le système de calcul (50) étant programmé pour calculer, à l'aide d'un plan d'épandage dans lequel est reportée une carte du champ, avec le trajet prévu pour la machine (10) et les positions de dépôt ou situations de dépôt prévues de la matière le trajet ou la surface encore susceptible d'être couvert(e) par la matière présente dans la citerne de réserve (36) et pour l'afficher.

8. Dispositif selon la revendication 6 ou 7, le système de calcul (50) étant programmé pour calculer et pour afficher le trajet pour lequel parmi plusieurs unités (16) de la machine (12) équipées chacune d'une propre citerne de réserve (36) le chemin restant est le plus court.

9. Dispositif selon l'une quelconque des revendications précédentes, le système de calcul (50) étant associé à un ordinateur de bord de la machine (10) ou à un véhicule en déplacement ou étant réalisé sous la forme d'un appareil portable, séparé de celui-ci.

10. Machine (10), destinée à l'épandage de matière sur un champ, pourvue d'un dispositif selon l'une quelconque des revendications précédentes, sous la forme d'une machine (10) d'épandage de semence et/ou de fertilisant et/ou de produits chimiques.
